# DEMANDE DE BREVET EUROPEEN

(11) **EP 1 628 383 A1**
(43) Date de publication de la demande: **22.02.2006**
(21) Numéro de dépôt: 05291702.8
(22) Date de dépôt: 09.08.2005
(51) Int. Cl.: H02K 5/22, H02K 15/00

(54) **Motorreducteur et procedes d'assemblage**

(30) Priorité: 10.08.2004 FR 0408793
(71) Demandeur: ArvinMeritor Light Vehicle Systems-France, 45600 Sully sur Loire (FR)
(72) Inventeur: Robin, Laurent, 41240 Ouzouer-le-Marche (FR); Lebourgeois, Mickaël, 45270 Auvilliers en Gatinas (FR); Bena, Marie-Pierre, 45620 Cerdon du Loiret (FR)
(74) Mandataire: Hirsch & Associés

(57) **Abrégé**

L'invention se rapporte à un motoréducteur (10) comprenant un carter (20), une embase (32) adaptée à recevoir un connecteur de contrôle du motoréducteur, l'embase étant intégrée au carter et en saillie du carter, une carte (22) de contrôle du fonctionnement du motoréducteur, la carte étant dans le carter et s'étendant selon la direction du rotor, des broches (28) reliées électriquement à la carte et adaptée à être connectées directement au connecteur de contrôle du motoréducteur.

L'invention se rapporte aussi à des procédés d'assemblage du motoréducteur.

## Description

La présente invention concerne un motoréducteur et des procédés d'assemblage du motoréducteur.

Un mécanisme d'entraînement d'ouvrant de véhicule, tel qu'un lève-vitre, peut être à entraînement électrique et comporter de ce fait un motoréducteur. Le motoréducteur est alimenté électriquement par un connecteur fixé à l'extrémité d'un faisceau d'alimentation. Les connecteurs étant de formes différentes selon les constructeurs automobiles, on a recours à un adaptateur pour assurer la liaison mécanique entre les différents connecteurs possibles et le motoréducteur. Le recours à un adaptateur entraîne des coûts de fabrication supplémentaires. Il y a donc un besoin pour un motoréducteur moins cher.

Pour cela l'invention propose un motoréducteur comprenant un moteur avec un rotor et un stator, un carter fixé au moteur, une embase intégrée dans le carter, en saillie du carter et adaptée à recevoir directement un connecteur de contrôle du motoréducteur, une carte de contrôle du fonctionnement du motoréducteur, la carte étant dans le carter et s'étendant selon la direction de l'axe du rotor, des broches conductrices reliées à la carte et adaptées à être connectées directement au connecteur de contrôle du motoréducteur.

Selon une variante, l'embase comporte un ou plusieurs organes de fixation du connecteur de contrôle.

Selon une variante, les broches sont fixées sur la carte, une extrémité libre des broches étant dans la hauteur de l'embase.

Selon une variante, le carter comporte une interface de fixation du moteur avec une ouverture de passage du rotor du moteur, l'ouverture débouchant dans la hauteur de l'embase selon la direction de passage du rotor.

Selon une variante, la hauteur entre l'axe du rotor et le haut du carter est supérieure à la hauteur entre l'axe du rotor et le haut des broches.

Selon une variante, les broches immobilisent la carte de contrôle par rapport au carter.

Selon une variante, les broches comportent un bloc de liaison de fixation au carter.

L'invention se rapporte aussi à un procédé d'assemblage d'une variante du motoréducteur décrite précédemment, le procédé comprenant les étapes de fourniture du carter, de la carte de contrôle et des broches, d'introduction de la carte de contrôle dans le carter, d'introduction des broches au travers de l'ouverture de l'embase, de mise en contact des broches et de la carte.

Selon une variante, les broches comportent un bloc de liaison, le procédé comprend en outre une étape de fixation du bloc de liaison au carter.

L'invention se rapporte aussi à un procédé d'assemblage d'une variante du motoréducteur décrite ci-dessus le procédé comprenant les étapes de fourniture d'un carter, d'une carte de contrôle et de broches, de fixation des broches à la carte de contrôle, d'introduction de la carte de contrôle par l'ouverture du carter, selon la direction de l'axe du rotor.

Selon une variante, que les broches s'étendent selon une direction perpendiculaire à la direction d'introduction de la carte.

Selon une variante, le carter comporte une interface de fixation du moteur avec une ouverture de passage du rotor du moteur, la carte étant introduite selon la direction de passage du rotor dans le carter.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un motoréducteur selon un mode de réalisation;
- figure 2, une vue en détail de la figure 1 ;
- figure 3, un motoréducteur selon un autre mode de réalisation.

L'invention se rapporte à un motoréducteur comprenant un carter et une embase adaptée à être fixée directement à un connecteur de contrôle du motoréducteur, l'embase étant en saillie du carter. Par ailleurs, le motoréducteur comporte des broches conductrices adaptées à être connectées directement au connecteur de contrôle. Ainsi, l'embase et les broches permettent l'intégration d'un connecteur de contrôle au motoréducteur sans l'interposition d'un adaptateur. Ceci permet de réduire le nombre de pièces et ainsi de réduire les coûts de fabrication du motoréducteur.

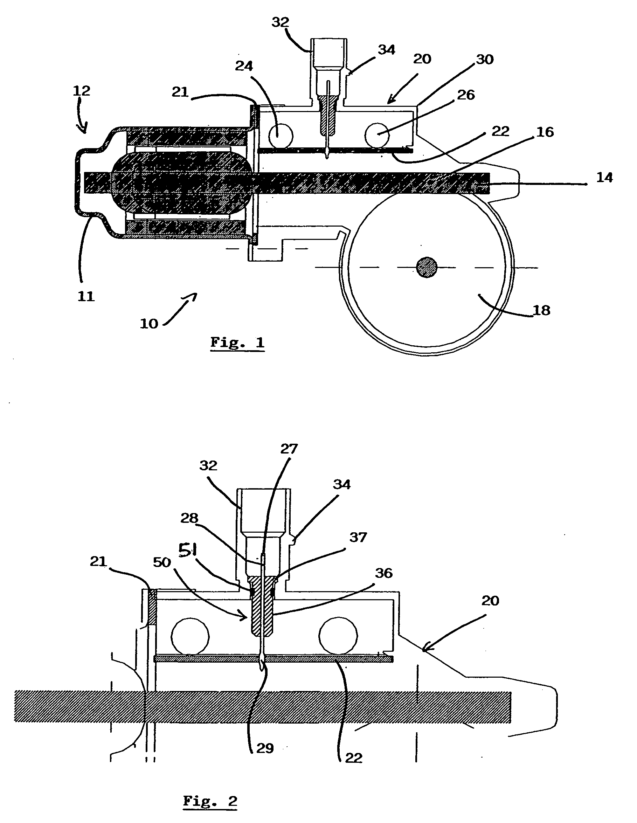

La figure 1 montre un motoréducteur 10 selon un mode de réalisation. Le motoréducteur 10 comprend un stator 11, un carter 20 et un rotor 14. L'ensemble stator 11 et rotor 14 fait partie d'un moteur 12. Le carter 20 peut comporter une interface 21 qui réalise l'étanchéité du moteur 12. Le rotor 14 entraîne à son tour un réducteur composé d'une vis sans fin 16 sur le rotor et d'une roue dentée 18 entraînée par la vis sans fin 16. Le réducteur est logé dans le carter 20.

Le motoréducteur 10 comprend en outre une carte 22 de contrôle du fonctionnement du motoréducteur. Notamment la carte 22 contrôle la mise en marche du moteur, l'inversion du sens de rotation, ou son arrêt. La carte est composée d'un circuit imprimé. Sont représentés à titre d'exemple deux composants 24 et 26. La carte 22 est dans le carter 20. Ceci permet de rendre plus compact le carter du motoréducteur et donc de réduire l'encombrement du motoréducteur. Par ailleurs, la présence de la carte 22 dans le motoréducteur permet d'éviter de prévoir un logement extérieur au carter pour la carte, entraînant des coûts de fabrication supplémentaires. Le carter 20 peut être légèrement agrandi, notamment en 30 sur la figure 1 pour contenir les composants électroniques de la carte. Par ailleurs, la carte 22 peut s'étendre sensiblement selon la direction de l'axe du rotor 14 (selon une dimension la plus grande de la carte) dans le carter 20, éventuellement avec une pénétration partielle dans le stator. Ceci est avantageux pour l'assemblage du motoréducteur car le rotor 14 et la carte 22 peuvent être insérés selon le même axe.

Le motoréducteur comprend par ailleurs une embase 32. L'embase 32 est représentée sur la figure 2 montrant la figure 1 en détail. L'embase 32 permet de fixer au motoréducteur un connecteur de contrôle du motoréducteur non représenté. Le connecteur est à l'extrémité d'un faisceau de conducteurs et est branché au motoréducteur par l'intermédiaire de l'embase 32. L'embase 32 est en saillie du carter 20 ce qui la rend adaptée à permettre la fixation directe du connecteur. Le connecteur est adapté à être branché directement à l'embase en ce sens qu'il n'y pas de pièce intermédiaire entre l'embase 32 et le connecteur. Ceci permet de réduire les coûts de fabrication du motoréducteur. L'embase 32 a des parois définissant par exemple la forme d'un puits, avec une section sensiblement rectangulaire selon une coupe transversale au plan de la figure. L'embase 32 débouche à sa base dans le carter 20. A titre d'exemple, l'embase est en saillie de 26,35 mm.

L'embase 32 est monobloc ou intégrée dans le carter 20. Ceci permet de fabriquer l'embase 32 et le carter 20 au cours d'une même opération, de moulage par exemple, et donc de rendre la fabrication de l'embase 32 peu onéreuse (un seul outillage au lieu de deux dans le cas de l'existence d'un adaptateur).

De manière avantageuse, l'embase 32 comporte un ou plusieurs organes de fixation 34 du connecteur de contrôle. L'organe 34 assure l'immobilisation du connecteur sur l'embase 32. L'organe de fixation 34 peut être monobloc avec l'embase 32, ce qui facilite la fabrication de l'organe 34. L'organe 34 est par exemple une protubérance coopérant avec une cavité du connecteur. L'organe 34 est par exemple sur une paroi de l'embase 32 selon l'axe longitudinal du motoréducteur.

Les broches 28 comportent un bloc de liaison 50 de fixation au carter. Sur les figures 1 et 2, seule une rangée de 6 à 10 broches est représentée, mais le motoréducteur peut comporter deux rangées ou plus. Les broches sont conductrices et sont reliées électriquement à la carte 22 ; elles assurent entre autre l'alimentation électrique ou le pilotage de la carte 22 de contrôle. De manière plus visible sur la figure 2, une extrémité 29 des broches peut être insérée dans un trou de la carte 22, de sorte à établir un contact avec des pistes de la carte 22 ; l'extrémité 29 peut être pointue, ce qui facilite son insertion dans la carte 22. Les broches 28 sont aussi adaptées de manière à être connectées directement au connecteur de contrôle du motoréducteur.

Une autre extrémité 27 opérationnelle des broches peut être en contact du connecteur sans intermédiaire tel qu'un adaptateur. Les broches 28 s'étendent depuis la carte 22 jusque dans la hauteur de l'embase 32. L'embase 32 étant rehaussée ou surélevée, les broches sont donc rallongées par rapport à des broches classiques. Sur la figure 2, l'extrémité 27 des broches 28 est en saillie de l'enveloppe du carter 20 et s'étend jusque dans l'embase 32. Les broches 28 ont pour cela une longueur supérieure aux broches classiques. Par exemple, les broches ont une longueur de 30,25 mm.

De manière avantageuse, les broches 28 après mise en place immobilisent en translation (sensiblement selon l'axe du rotor 14) la carte 22 de contrôle par rapport au carter 20. La carte 22 peut être maintenue par le carter 20 selon une direction perpendiculaire au plan de la figure 2, par exemple par des glissières le long de la paroi interne du carter 20. L'immobilisation de la carte 22 par rapport au carter 24 selon la direction du rotor 14 est réalisée par l'insertion de l'extrémité 29 dans la carte 22.

Les broches 28 s'intègrent dans un bloc de liaison 50. Un seul bloc de liaison peut supporter toutes les broches. Les broches 28 s'étendent de part et d'autre du bloc de liaison 50, les extrémités 27 et 29 des broches étant libres. Le bloc de liaison comporte par exemple un corps 36 moulé autour de chaque broche, ou les broches peuvent être introduites en force au travers du corps 36 du bloc de liaison. Le bloc de liaison 50 permet en particulier de fixer les broches 28 par rapport au carter 20. Le corps 36 du bloc de liaison 50 coopère avec l'embase 32 pour immobiliser les broches, et ainsi pour immobiliser la carte 22 par rapport au carter 20. En particulier, le bloc de liaison 50 peut coopérer avec la base de l'embase 32 débouchant dans le carter. Le bloc de liaison 50 peut comporter un épaulement 37 coopérant avec un rebord de l'embase. Par ailleurs, le bloc de liaison 50 peut en outre assurer l'étanchéité du carter 20 ; le bloc de liaison 50 peut être conçu, notamment de par son épaulement 37, pour obturer l'orifice de passage des broches 28 entre l'embase 32 et l'intérieur du carter 20. Par ailleurs, le bloc de liaison peut être pourvu d'un joint périphérique 51 sur le corps 36, afin d'assurer l'étanchéité du carter 20. Le joint 51 peut coopérer avec l'embase pour assurer l'étanchéité du carter.

Un problème se pose pour l'assemblage d'un tel motoréducteur. En effet, les broches 28 étant adaptées à être connectées directement au connecteur de contrôle, elles présentent une longueur supérieure à celle des broches classiques. Ces dernières sont fixées sur la carte de contrôle et peuvent être introduites dans le carter 20 avec la carte 22 au travers de l'interface 21 du carter 20. Dans le cas présent, les broches viennent en butée contre le carter 20.

Pour cela un procédé d'assemblage du motoréducteur consiste à assembler les broches 28 au motoréducteur 10 indépendamment de la carte 22. Une première étape consiste à fournir le carter 20, la carte de contrôle 22 et les broches 28. Les broches 28 et la carte 22 ne sont pas assemblées. Le procédé comprend ensuite l'insertion de la carte 22 dans le carter 20. La carte 22 peut être introduite dans le carter 20 sensiblement selon l'axe du rotor 14. Le carter 22 peut comporter des glissières de réception de la carte 22. La carte 22 peut être introduite dans le carter 20 jusqu'à venir en butée en fond de carter. Le procédé peut ensuite comprendre des étapes d'introduction des broches 28 par l'embase 32 et de mise en contact des broches 28 avec la carte 22. Le bloc de liaison 50 est introduit à travers l'embase 32 jusqu'à ce que les broches 28 viennent en contact de la carte 22. L'embase 32 permet donc l'assemblage des broches 28 au motoréducteur alors même que les broches sont rallongées. Cette solution d'assemblage permet d'insérer la carte 22 dans le carter 20 sans aménagement particulier de l'interface 21 ; le carter 20 peut donc présenter une interface 21 et des organes de fixation au moteur qui soient classiques ce qui est moins onéreux.

Par exemple, la mise en contact des broches avec la carte peut être simplement réalisée par l'introduction en force de l'extrémité 29 des broches 28 dans la carte 22. Les broches 28 munies du bloc de liaison 50 peuvent être en outre introduites dans l'embase 32. Ceci permet d'assurer l'immobilisation des broches 28 et de la carte 22, ainsi que l'étanchéité du carter 20. Cette étanchéité peut être renforcée par la mise en place du joint 51 périphérique sur le corps 36.

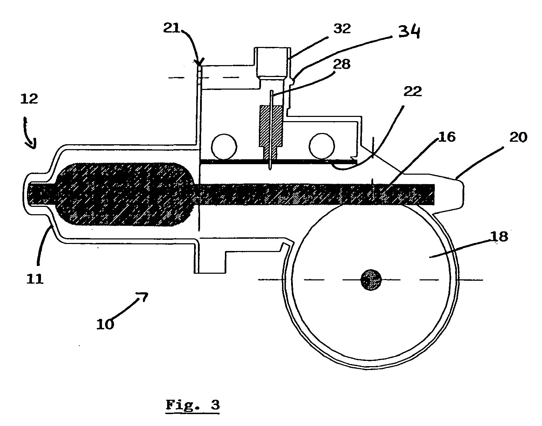

La figure 3 montre un autre mode de réalisation du motoréducteur 10. Comme sur la figure 1, le motoréducteur 10 comprend le carter 20 fixé au stator 11. Le carter 20 comporte l'interface 21 de fixation au stator 11. Le motoréducteur comporte aussi le réducteur composé de la vis sans fin 16 sur le rotor et de la roue dentée 18 entraînée par la vis sans fin 16. On retrouve aussi la carte de contrôle 22 avec les mêmes spécificités que sur la figure 1.

Le motoréducteur comprend aussi la carte de contrôle 22 et l'embase 32. La carte 22 est disposée et a les caractéristiques mentionnées ci-dessus. Comme celle de la figure 1, l'embase 32 de la figure 3 permet de fixer au motoréducteur un connecteur de contrôle du motoréducteur. L'embase 32 est en saillie du carter 20 ce qui la rend adaptée à recevoir directement le connecteur. L'embase 32 est aussi mise en forme de manière à prendre la forme d'un adaptateur. Les avantages liés à l'embase 32 sont les mêmes que ceux précédemment énoncés ; en particulier, un tel motoréducteur évite l'utilisation d'un adaptateur pour intégrer le connecteur au motoréducteur, ce qui réduit les coûts de fabrication du motoréducteur. Par ailleurs, pour éviter l'utilisation de l'adaptateur, les broches 28 sont, comme sur les figures 1 et 2, rallongées. Les broches peuvent avoir les mêmes dimensions que sur les autres figures.

Le motoréducteur de la figure 3 diffère de celui des deux autres figures en ce sens que l'interface 21 de fixation du moteur comporte une ouverture agrandie de passage du rotor du moteur, l'ouverture débouchant dans la hauteur de l'embase 32, selon la direction de passage du rotor. En d'autres termes, une partie de l'ouverture à travers l'interface 21 est agrandie dans une direction transversale à la direction du rotor, dans le plan de la figure. L'ouverture à travers l'interface est augmentée de la taille des broches 28. La hauteur entre l'axe du rotor 14 et le haut du carter est supérieure à la hauteur entre l'axe du rotor 14 et le haut des broches 28. L'interface 21 de fixation du moteur a donc une surface augmentée. Ainsi, il est envisageable d'introduire des broches 28 rallongées par l'ouverture de l'interface, tout en prévoyant que les broches 28 soient préalablement fixées à la carte 22.

Le carter 20 est mis en forme entre l'ouverture de l'interface 21 et l'embase 32 de sorte qu'un passage de broches soit possible. Selon la direction du rotor, l'embase 32 comporte une paroi, à l'opposé de l'interface 21, qui est en saillie du reste du carter ; cette paroi de l'embase 32 supporte l'organe de fixation 34. Toujours selon la direction du rotor, l'embase 32 comporte une autre paroi partiellement confondue dans le carter 20. Ainsi, le périmètre du carter 20 entre l'interface 21 et l'embase 32 est augmenté.

Le moteur 12 est fixé à l'interface 21 par l'intermédiaire du stator 11. L'interface 21 ayant une surface augmentée, le stator 11 du moteur est alors mis en forme de sorte à s'adapter à l'interface 21. Sur la figure 3, le stator 11 comporte une paroi s'adaptant à la forme de l'interface 21.

En raison de la taille plus importante des broches pour permettre une connexion sans adaptateur, on peut définir un autre procédé d'assemblage du motoréducteur de la figure 3. Ce procédé permet aussi de résoudre le problème de l'introduction des broches rallongées dans le carter 20. Le procédé d'assemblage du motoréducteur consiste à assembler les broches 28 sur la carte 22 avant d'introduire cette dernière dans le motoréducteur ; grâce au volume libéré par le rehaussement du carter 20 débouchant dans l'embase 32, il est possible d'insérer la carte munie des broches 28.

Une première étape consiste à fournir le carter 20 tel que décrit en relation avec la figure 3, la carte de contrôle 22 et les broches 28. Les broches 28 et la carte 22 sont ensuite assemblées. Pour cela les broches sont par exemple soudées à la carte 22 ; les broches 28 peuvent s'étendre selon une direction perpendiculaire au plan de la carte 22 (cas d'une insertion des broches à travers la carte), ou être recourbées parallèlement à la carte et être soudées en surface sans insertion des broches au travers de la carte. Le procédé comprend ensuite une étape d'introduction de la carte 22 dans le carter 20. L'introduction dans le carter 20 peut avoir lieu selon la direction de passage du rotor ce qui facilite l'introduction de la carte. Par ailleurs, le carter 20 étant mis en forme de sorte à augmenter son périmètre et assurer un passage des broches, l'introduction de la carte 22 munie des broches 28 est facilitée. Ce procédé présente l'avantage d'assembler la carte 22 et les broches 28 en même temps au motoréducteur, ce qui facilite le montage de ce dernier.

Les procédés décrits ci-dessus peuvent ensuite comprendre des étapes d'achèvement d'assemblage du motoréducteur, telles que l'introduction du rotor dans le carter 20, parallèlement à la carte 22, ainsi que la fixation du moteur 12 au carter 20, par exemple à l'interface 21 du carter 20.

## Revendications

1. Un motoréducteur (10) comprenant :
- un moteur (12) avec un rotor (14) et un stator (11),
- un carter (20) fixé au moteur,
- une embase (32) intégrée dans le carter, en saillie du carter et adaptée à recevoir directement un connecteur de contrôle du motoréducteur,
- une carte (22) de contrôle du fonctionnement du motoréducteur, la carte étant dans le carter et s'étendant selon la direction de l'axe du rotor,
- des broches (28) conductrices reliées à la carte et adaptées à être connectées directement au connecteur de contrôle du motoréducteur.

2. Le motoréducteur selon la revendication 1, **caractérisé en ce que** l'embase (32) comporte un ou plusieurs organes (34) de fixation du connecteur de contrôle.

3. Le motoréducteur selon la revendication 1 ou 2, **caractérisé en ce que** les broches (28) sont fixées sur la carte, une extrémité (27) libre des broches étant dans la hauteur de l'embase (32).

4. Le motoréducteur selon la revendication 1 à 3, **caractérisé en ce que** le carter (20) comporte une interface de fixation du moteur (21) avec une ouverture de passage du rotor du moteur, l'ouverture débouchant dans la hauteur de l'embase selon la direction de passage du rotor.

5. Le motoréducteur selon la revendication précédente, **caractérisé en ce que** la hauteur entre l'axe du rotor (14) et le haut du carter est supérieure à la hauteur entre l'axe du rotor (14) et le haut des broches (28).

6. Le motoréducteur selon la revendication 1 à 3, **caractérisé en ce que** les broches (28) immobilisent la carte (22) de contrôle par rapport au carter (20).

7. Le motoréducteur selon la revendication 6, **caractérisé en ce que** les broches (28) comportent un bloc de liaison (50) de fixation au carter.

8. Procédé d'assemblage d'un motoréducteur selon la revendication 6 ou 7, **caractérisé en ce qu'**il comprend les étapes de :
- fourniture du carter (20), de la carte (22) de contrôle et des broches (28),
- introduction de la carte (22) de contrôle dans le carter (20),
- introduction des broches (28) au travers de l'ouverture de l'embase (32),
- mise en contact des broches (28) et de la carte (22).

9. Le procédé selon la revendication précédente, **caractérisé en ce que** les broches (28) comportent un bloc de liaison (50), le procédé comprend en outre une étape de fixation du bloc de liaison (50) au carter (20).

10. Un procédé d'assemblage d'un motoréducteur selon la revendication 4 ou 5, **caractérisé en ce qu'**il comprend les étapes de
- fourniture d'un carter (20), d'une carte (22) de contrôle et de broches (28),
- fixation des broches (28) à la carte (22) de contrôle,
- introduction de la carte (22) de contrôle par l'ouverture du carter (20), selon la direction de l'axe du rotor (14).

11. Le procédé d'assemblage selon l'une des revendications 8 à 10, **caractérisé en ce que** les broches (28) s'étendent selon une direction perpendiculaire à la direction d'introduction de la carte (22).

12. Le procédé selon l'une des revendications 8 à 11, **caractérisé en ce que** le carter (20) comporte une interface (21) de fixation du moteur (12) avec une ouverture de passage du rotor (14) du moteur, la carte (22) étant introduite selon la direction de passage du rotor (14) dans le carter (20).
